# FASCICULE DE BREVET EUROPEEN

(11) **EP 1 744 875 B1**
(45) Date de publication et mention de la délivrance du brevet: **07.06.2017**
(21) Numéro de dépôt: 05746740.9
(22) Date de dépôt: 20.04.2005
(51) Int. Cl.: B32B 15/00

(54) **MATERIAU D'ISOLATION THERMIQUE**
THERMISCHES ISOLATIONSMATERIAL
THERMAL INSULATION MATERIAL

(30) Priorité: 23.04.2004 SE 0401043
(43) Date de publication de la demande: 24.01.2007
(73) Titulaire: SAINT-GOBAIN ISOVER, 92400 Courbevoie (FR)
(72) Inventeur: TIGERFELDT, Staffan, S-25284 HELSINGBORG (SE)
(74) Mandataire: Saint-Gobain Recherche
(86) Numéro de dépôt international: PCT/FR2005/050262
(87) Numéro de publication internationale: WO 2005/105430

(56) Documents cités:
- WO-A-95/13915
- DE-A1- 4 410 558
- GB-A- 2 336 565
- US-A- 3 826 862
- US-A- 4 271 218
- US-A- 5 322 721

## Description

L'invention concerne un matériau de revêtement sous forme stratifiée destiné à des systèmes d'isolation pour éléments d'installation tels que des tuyaux, des récipients et des conduits de ventilation. L'invention concerne également un système d'isolation comprenant un tel matériau de revêtement.

Dans le domaine de la technique du bâtiment et des procédés, il est courant d'isoler, par exemple, des tuyaux et des récipients. L'isolation peut s'effectuer au moyen de coquilles pour tuyaux, de panneaux ou de mats. Une isolation typique se compose d'un matériau thermiquement isolant, tel que de la laine minérale, qui, sur son côté tourné vers l'environnement extérieur, est pourvu d'une couche extérieure protectrice en plastique, papier ou métal, stratifiée sur celui-ci. La couche extérieure protectrice présente conventionnellement une très faible épaisseur. Au cas où elle est constituée d'aluminium, l'épaisseur est de l'ordre de 18 µm, ce qui est considéré comme la limite inférieure pour une feuille d'aluminium résistant à la diffusion. Cette faible épaisseur fait que la couche extérieure est toutefois sujette aux endommagements mécaniques qui peuvent survenir par exemple au cours du montage ou de l'entretien. Une manière usuelle d'augmenter sa solidité est de munir la couche extérieure d'une armature, par exemple des fibres de verre noyées dans la couche extérieure. Une telle armature n'est toutefois pas suffisante pour conférer les propriétés mécaniques requises à la couche extérieure de l'isolation. De bonnes propriétés mécaniques sont importantes, par exemple, en ce qui concerne l'entretien, dans la mesure où la surface isolante peut, dans de nombreux cas, être l'unique surface de support disponible par exemple pour une échelle. Les propriétés mécaniques sont également importantes dans des espaces retreints où il existe un risque important qu'une personne se cogne contre la couche extérieure et l'endommage.

Au cas où les isolations décrites ci-dessus sont constituées d'une coquille pour tuyau, celle-ci présente, pour des raisons de montage, une fente, qui lui permet d'être aisément ouverte et montée sur un tuyau. La fente est ensuite scellée au moyen d'une bande de ruban adhésif par exemple, tout comme les joints entre les éléments adjacents. Des exemples de telles coquilles pour tuyaux et de leur montage sont indiqués par exemple dans le document US 4 606 957. Au cas où l'on utilise des mats, un scellage correspondant est effectué au moyen de ruban adhésif ou de feuille pourvue d'adhésif.

Au cas où un tel scellage est considéré comme insuffisant, l'isolation peut, conformément au document EP 0 308 191, être pourvue de surfaces promotrices d'adhésion en association avec un ruban adhésif adapté à cet effet.

Pour augmenter les propriétés mécaniques tout en assurant un scellage satisfaisant, il est très couramment approprié de compléter de telles isolations pendant le montage avec une coque extérieure. Cette coque peut par exemple être constituée de recouvrements plastiques ou métalliques moulés rigides, mais toujours flexibles. Les joints qui se forment entre les recouvrements sont scellés par exemple au moyen de ruban adhésif ou de feuille du même type de matériau que les recouvrements. Au cas où l'isolation a lieu sur des surfaces exposées à la condensation, une étanchéité à la condensation doit être disposée à l'intérieur d'un tel recouvrement.

Il conviendra de noter que la personne réalisant le scellage doit fournir un travail exigeant pour fournir un résultat satisfaisant. Dans de nombreux cas, le travail est compliqué, en partie dans la mesure où les tuyaux et les récipients ont souvent une forme et une étendue complexes et en partie parce que l'accessibilité est souvent limitée. De plus, l'adhésivité lors du montage et du fonctionnement sur le site est souvent insuffisante en raison de la saleté et de l'humidité.

Les recouvrements métalliques utilisés, par exemple disponibles sous la dénomination commerciale ALUPAK®, ou généralement sous le terme de "plaque stucco", sont formés d'aluminium pur d'une épaisseur de 0,1 - 0,2 mm, qui est pressé à la forme souhaitée. Il existe un risque manifeste d'endommagements par coupures au cours de la manipulation. De plus, la résistance mécanique à la rupture est insuffisante. L'utilisation de recouvrements en plastique, par exemple disponibles sous la dénomination commerciale Isogenopak®, sont moins avantageux du point de vue de la résistance au feu.

La technique décrite ci-dessus est la même, qu'il s'agisse de surfaces froides, exposées à la condensation, ou de surfaces chaudes, non exposées à la condensation.

Une estimation dans ce secteur d'activité indique qu'environ 90-95% de toutes les isolations sont combinés à une couche extérieure séparée sous forme de recouvrements, par exemple tels que décrits ci-dessus. Cela signifie par conséquent que l'on réalise dans ce cas un double travail de montage, qui est coûteux, fastidieux, et entraîne un risque élevé de défauts superficiels voire même des défauts intégrés.

L'objet de la présente invention est de fournir un matériau de revêtement sous forme stratifiée qui présente des propriétés mécaniques, en particulier une résistance à la rupture, une tenue aux chocs et une résistance à la pénétration telles qu'il puisse supporter une manipulation normale lors du montage et de l'entretien et par ailleurs des contraintes normales au cours de la durée de vie de l'isolation.

Le matériau de revêtement devrait de plus être simple et économique à fabriquer.

Un autre objet est de fournir un matériau de revêtement qui soit conforme aux réglementations en vigueur en termes de résistance au feu, par exemple "couche extérieure de classe 1", conformément à SS 02 48 23/NORDTEST-FIRE 004.

Encore un autre objet est que le matériau de revêtement puisse être appliqué sur un système d'isolation au cours de sa production afin de former une unité intégrée dans l'équipement de production existant avec d'éventuelles modifications mineures. Le matériau de revêtement devrait toutefois pouvoir aussi être utilisé lors du montage en dehors de la chaîne de production.

Encore un objet est que le système d'isolation comprenant un tel matériau de revêtement puisse être monté directement sur place sans doublure supplémentaire sous forme de recouvrements séparés, par exemple.

Afin de réaliser les objets indiqués ci-dessus ainsi que d'autres objets non mentionnés, la présente invention concerne un matériau de revêtement et un système d'isolation comprenant un tel matériau de revêtement ayant les caractéristiques indiquées dans les revendications indépendantes. Des formes de réalisation préférées du matériau de revêtement et du système d'isolation ressortent des revendications dépendantes.

Plus précisément, l'invention concerne un matériau de revêtement sous forme stratifiée pour un système d'isolation pour éléments d'installation tels que des tuyaux, des récipients et des conduits de ventilation, lequel système d'isolation présente une surface que le matériau de revêtement doit recouvrir. Le matériau de revêtement est caractérisé par une première couche en feuille métallique extérieure, par exemple une feuille d'aluminium, ayant une épaisseur comprise dans la plage de 20 à 100 µm et plus préférablement de 30 à 60 µm, ainsi que par une couche en plastique disposée entre la première couche en feuille métallique et la surface du système d'isolation. Un tel matériau de revêtement, malgré sa faible épaisseur, est très flexible et facile à manipuler, tout en présentant des propriétés mécaniques, en particulier une résistance à la rupture, une tenue aux chocs et une résistance à la pénétration telles qu'il puisse supporter sans problème une manipulation normale lors du montage et de l'entretien et par ailleurs des contraintes normales au cours de la durée de vie de l'isolation. Ces propriétés sont obtenues sans utiliser de recouvrements extérieurs de protection. Malgré sa faible épaisseur, il résiste aussi aux contraintes mécaniques qui peuvent se produire au cours du lavage ou du nettoyage, ce qui n'est pas le cas avec une couche extérieure conventionnelle en feuille d'aluminium résistant à la diffusion. Les propriétés mécaniques sont obtenues principalement grâce à la couche en plastique. Grâce à la couche en feuille métallique extérieure, le matériau de revêtement présente en outre une résistance au feu extrêmement élevée.

Le matériau de revêtement est de fabrication simple et économique et la fabrication peut avoir lieu dans un équipement existant avec aucune ou peu de modifications. Le matériau de revêtement peut toutefois aussi bien être appliqué sur un matériau isolant sur le site sous la forme d'un matériau de revêtement disposé lâchement, ou être appliqué en utilisant de la chaleur.

La couche en plastique peut avoir une épaisseur épaisseur comprise dans la plage de 10 à 100 µm ou plus préférablement de 20 à 40 µm.

La couche en plastique peut être constituée de PET (polyéthylène téréphtalate), notamment ayant une épaisseur comprise dans la plage de 10 à 100 µm ou plus préférablement de 20 à 40 µm.

Le matériau de revêtement comprend une couche de liant thermoplastique qui est prévue pour relier ledit matériau de revêtement audit système d'isolation, le point de fusion de ladite couche de liant thermoplastique étant inférieur au point de fusion de ladite couche en plastique. Du fait que le point de fusion est inférieur à celui de la couche en plastique, la couche en plastique n'est pas affectée et de ce fait la structure interne du matériau de revêtement n'est pas affectée non plus par l'application du matériau de revêtement par le biais de la chaleur.

Le liant thermoplastique peut être disposé sous forme de couche continue ou sous forme de couche discontinue. La couche de liant est constituée avantageusement de LDPE (polyéthylène basse densité) d'une épaisseur comprise dans la plage de 10 à 100 µm, et plus préférablement de 20 à 50 µm.

Le matériau de revêtement peut comprendre une deuxième couche en feuille métallique interne, par exemple une feuille d'aluminium, qui présente une épaisseur comprise dans la plage de 5 à 30 µm, et plus préférablement de 7 à 20 µm, laquelle couche en feuille métallique est disposée entre ladite couche en plastique et ladite couche de liant thermoplastique.

Le matériau de revêtement présente avantageusement une structure superficielle munie de gaufrages. En variante, seule la couche en feuille métallique extérieure peut présenter une telle structure superficielle. L'objectif principal est de fournir une surface réduisant la réflexion de la lumière incidente. Selon sa structure superficielle, on peut aussi obtenir d'autres effets, par exemple un effet en accordéon pour l'utilisation conjointement avec une coquille pour tuyau flexible. Un gaufrage fait aussi en sorte que les marques d'impression éventuelles soient moins visibles.

La couche en plastique et/ou la couche de liant thermoplastique contiennent avantageusement un agent ignifuge.

Conformément à une forme de réalisation, le matériau de revêtement peut comprendre un matériau hygroscopique qui est disposé de manière adjacente à la couche de liant thermoplastique. En fonction des configurations de la couche de liant thermoplastique, il est possible de cette manière d'absorber l'humidité/la condensation qui peut se former lors de l'utilisation dans ou à l'intérieur de la surface sur laquelle le matériau de revêtement est appliqué.

Pour obtenir un effet de courbure du matériau de revêtement, les couches incluses peuvent présenter différentes tensions d'étirement. Ceci est avantageux dans le cadre d'une utilisation pour un système d'isolation avec une certaine courbure.

Conformément à un autre aspect de l'invention, celle-ci concerne un système d'isolation comprenant un matériau de revêtement selon l'une des revendications de matériau de revêtement, lequel système d'isolation comprend un volet disposé sur ledit matériau de revêtement prévu pour l'application sur un joint entre deux systèmes d'isolation adjacents ou une fente dans un système d'isolation. Le volet peut présenter, sur l'une de ses faces, une partie pourvue d'adhésif. De tels volets facilitent l'obtention de joints satisfaisants lors du montage.

Le matériau hygroscopique, grâce audit volet, peut être librement exposé à l'atmosphère environnante dans l'état monté du système d'isolation. Ceci fournit une surface d'évaporation très efficace pour l'humidité ou la condensation éventuelle qui a été absorbée dans le matériau hygroscopique.

Le matériau de revêtement peut être appliqué sur le matériau thermiquement isolant dans une mesure telle que le matériau hygroscopique se trouve en liaison directe avec le matériau thermiquement isolant. De cette manière, l'humidité/la condensation éventuelle dans le système d'isolation peut être simplement absorbée et évacuée de manière appropriée vers l'atmosphère environnante en vue de son évaporation.

Selon la présente invention, le système d'isolation comprenant le matériau de revêtement selon l'une quelconque des revendications de matériau de revêtement, peut être constitué d'une coquille pour tuyau, d'un mat ou d'une feuille.

L'invention est décrite ci-dessous plus en détail à titre d'exemple en référence aux dessins annexés, qui illustrent une forme de réalisation actuellement préférée.
La figure 1 illustre une coupe transversale schématique d'un matériau de revêtement selon une première forme de réalisation de l'invention.
La figure 2 illustre une deuxième forme de réalisation du matériau de revêtement selon l'invention.
La figure 3 illustre schématiquement un système d'isolation sous forme d'une coquille pour tuyau avec le matériau de revêtement conformément à l'invention.

Le matériau de revêtement selon l'invention est prévu pour être appliqué sur un matériau thermiquement isolant en vue de former un système d'isolation pour tuyaux, récipients, conduits de ventilation et similaires. Le système d'isolation peut être constitué, par exemple, de coquilles pour tuyau, de mats ou de feuilles. L'application est prévue pour avoir lieu principalement conjointement avec la production dudit système d'isolation et sera décrite ci-après. Le matériau de revêtement peut naturellement aussi, comme s'en apercevra l'homme de l'art, être utilisé dans des optiques différentes et être appliqué par la suite.

Le terme système d'isolation signifie principalement un système d'isolation présentant un matériau thermiquement isolant. Un tel matériau est constitué, de manière appropriée par un matériau thermiquement isolant conventionnel tel que de la laine minérale ou tout autre matériau permettant la diffusion. Le terme de laine minérale inclut la laine de verre et la laine de roche ainsi que des matériaux fibreux correspondants.

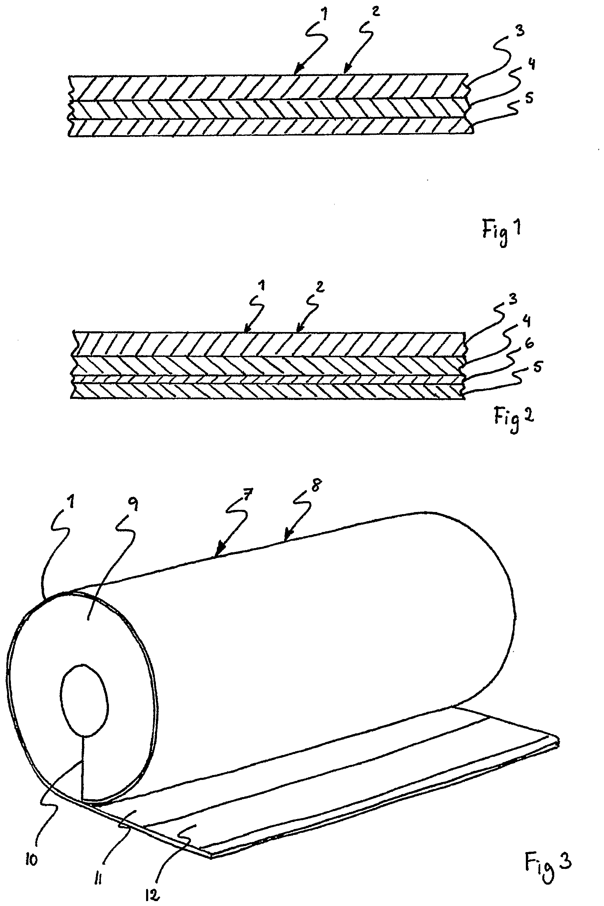

En référence à la figure 1, il est illustré une coupe transversale schématique d'un matériau de revêtement 1 conformément à la forme de réalisation la plus simple de l'invention.

Le matériau de revêtement 1 se compose d'un stratifié 2, c'est-à-dire d'une pluralité de couches assemblées les unes aux autres. Il convient de souligner que toutes les couches de matériau de la figure 1 et des autres figures, pour des raisons de clarté, sont illustrées avec des proportions fortement exagérées.

En partant de l'extérieur, c'est-à-dire avec le côté prévu pour être exposé à l'environnement, le matériau de revêtement 1 comprend une couche en feuille métallique extérieure 3, de préférence en aluminium. D'autres métaux ou alliages sont également possibles. La couche en feuille métallique 3 présente une épaisseur comprise dans la plage de 20 à 100 µm et plus préférablement de 30 à 60 µm. Un objet de cette couche est de conférer au matériau de revêtement 1 une résistance au feu conforme aux réglementations en vigueur en terme de résistance au feu, par exemple "couche extérieure de classe 1" selon SS 02 48 23/NORDTEST-FIRE 004.

Un autre objet de cette couche est qu'elle constitue une barrière à la diffusion contre la pénétration de l'humidité.

La couche en feuille métallique 3 peut être constituée de métal, mais peut aussi comprendre une forme quelconque d'armature, par exemple des fibres de verre.

La couche en feuille métallique 3, ou plus préférablement le matériau de revêtement 1 dans son ensemble, peuvent présenter une structure superficielle gaufrée qui augmente les propriétés mécaniques tout en réduisant la réflexion de la lumière incidente. Le gaufrage peut par exemple être constitué par un motif irrégulier pour obtenir une bonne réfraction de la lumière, un rainurage circonférentiel pour permettre un effet d'accordéon pour faciliter par exemple le coudage d'une coquille pour tuyau, ou un motif ondulé pour permettre l'interposition de deux couches de matériau disposées l'une contre l'autre. Le gaufrage peut bien sûr, ce qui est connu de l'homme de l'art, être configuré de nombreuses manières différentes en obtenant le même effet.

A l'intérieur de cette couche se trouve une couche en plastique 4, qui se compose de préférence de PET (polyéthylène téréphtalate). Cette couche est avantageusement disposée directement en position adjacente à la couche en feuille métallique extérieure 3. Au cas où le matériau de revêtement 1 comprend des couches supplémentaires non mentionnées ici, il est essentiel que la couche en plastique 4 soit disposée entre la couche en feuille métallique extérieure 3 et la couche de liant thermoplastique 5 qui sera décrite plus loin.

La couche en plastique 4 présente une épaisseur de 10 à 100 µm et plus préférablement dans la plage de 20 à 40 µm. En laminant la couche en feuille métallique extérieure 3 avec une couche en plastique 4, telle que du PET, on obtient un matériau de revêtement 1 avec de très bonnes propriétés mécaniques et en particulier une ténacité qui confère au matériau une bonne résistance à la rupture et une bonne résistance à la pénétration. La couche en plastique 4 devrait par conséquent présenter une résistance à la rupture supérieure à celle de la couche en feuille métallique extérieure 3.

La couche en plastique 4 est appliquée contre la couche en feuille métallique 3 par fusion conjointe ou collage avec cette dernière pour former ledit stratifié 2. La fusion conjointe ou le collage donne lieu à un matériau de revêtement 1 présentant des arêtes moins vives qu'une simple feuille métallique, ce qui réduit considérablement le risque de blessures par coupures lors de la manipulation.

Le matériau de revêtement illustré 1 présente finalement une couche de liant thermoplastique 5, ci-dessous appelée couche de liant, qui est disposée sur la couche en plastique 4. La couche de liant 5 peut, par exemple, se composer de LDPE (polyéthylène faible densité). Cette couche peut être constituée d'un film continu ou discontinu, ou par exemple d'une couche pressée ou pulvérisée qui est fondue contre la couche en plastique susmentionnée 4 pour former ledit stratifié. La couche de liant 5 présente, lorsqu'elle est composée de LPDE, une épaisseur comprise dans la plage de 10 à 100 µm, et plus préférablement de 20 à 50 µm.

Le matériau de la couche de liant 5 est choisi de telle sorte que sa température de fusion soit inférieure à celle de la couche en plastique 4. Cela signifie que la structure interne du matériau de revêtement 1 n'est pas affectée par l'application de chaleur.

En référence à la figure 2, il est illustré une deuxième variante du matériau de revêtement selon l'invention 1. Le matériau de revêtement illustré 1 se distingue de celui que l'on vient de décrire par le fait qu'il présente une couche en feuille métallique interne 6 qui est disposée entre la couche en plastique 4 et la couche de liant 5. Cette couche en feuille métallique interne 6 se compose de préférence d'aluminium d'une épaisseur comprise dans la plage de 5 à 30 µm, et plus préférablement de 7 à 20 µm. Le but de cette couche est de coopérer avec la couche en plastique 4 pour conférer au matériau de revêtement 1 des propriétés mécaniques et des propriétés ignifuges améliorées. La couche en feuille métallique interne 6 est stratifiée par fusion conjointe, ou en variante au moyen d'un adhésif, contre la couche en plastique 4.

Les couches de matériau 3, 4, 5, 6 décrites ci-dessus sont, comme mentionné, disposées sous forme d'un stratifié 2, qui, au cours de la fabrication d'un système d'isolation, est prévu pour être appliqué sous l'effet de la chaleur et de la pression, par exemple contre un matériau thermiquement isolant intégré dans le système d'isolation pour produire l'adhésion souhaitée contre celui-ci. Le terme de chaleur signifie ici une température supérieure au point de fusion de la couche de liant en question.

Le matériau de revêtement 1 décrit ci-dessus peut être manipulé en une seule pièce sous forme de feuilles ou de rouleaux jusqu'au lieu de production du système d'isolation. La production du matériau de revêtement 1 et du système d'isolation peut aussi s'effectuer par un processus continu.

Il convient naturellement d'apprécier que le matériau de revêtement 1 peut aussi être appliqué sur place, par exemple sous la forme de rubans ou de feuilles plus courts.

Celui-ci peut être appliqué lâchement contre le matériau isolant ou être appliqué sur celui-ci par une application de chaleur. En outre, il peut être utilisé pour sceller des joints ou des fentes dans ou entre des systèmes d'isolation successifs.

Dans un but de recherche, une comparaison d'un certain nombre de propriétés mécaniques a été effectuée entre un matériau de recouvrement selon l'invention, pourvu d'une structure superficielle gaufrée, et un matériau de dénomination Isogenopak® de surface lisse. Le stratifié testé selon l'invention avait la composition suivante, en partant de l'extérieur, c'est-à-dire avec le côté extérieur considéré lors de l'utilisation : feuille d'aluminium (40 µm, 108 g/m²), adhésif (3 g/m²), PET (23 µm, 32 g/m²), adhésif (3 g/m²), feuille d'aluminium (9 µm, 24 g/m², et LDPE (22 g/m²).

Les valeurs mesurées sont illustrées dans le tableau ci-dessous.

| **Propriété** | **Stratifié selon l'invention** | **Isogenopak®** |
|---|---|---|
| Poids par unité de surface (g/m²) | 201 | 491 |
| Epaisseur (mm) | 0,32 | 0,33 |
| Résistance à la traction⁽¹⁾ (kN/m) (1er max.) | 8,1 (parallèlement à la longueur du spécimen) | 13,3 (parallèlement à la longueur du spécimen) |
| Résistance à la traction⁽¹⁾ (kN/m) (1er max.) | 8,0 (perpendiculairement à la longueur du spécimen) | 12,2 (perpendiculairement à la longueur du spécimen) |
| Elongation⁽¹⁾ (%) (1er max.) | 3,6 (parallèlement à la longueur du spécimen) | 2,5 (parallèlement à la longueur du spécimen) |
| Elongation⁽¹⁾ (%) (1er max.) | 3,1 (perpendiculairement à la longueur du spécimen) | 2,5 (perpendiculairement à la longueur du spécimen) |
| Elasticité⁽¹⁾ (ΔF/ε) (kN/m) | 521 (parallèlement à la longueur du spécimen) | 990 (parallèlement à la longueur du spécimen) |
| Elasticité⁽¹⁾ (ΔF/ε) (kN/m) | 564 (perpendiculairement à la longueur du spécimen) | 903 (perpendiculairement à la longueur du spécimen) |
| Résistance à la rupture⁽²⁾ (N) | 5,5 (parallèlement à la longueur du spécimen) | 15,7 (parallèlement à la longueur du spécimen) |
| Résistance à la rupture⁽²⁾ (N) | 5,4 (perpendiculairement à la longueur du spécimen) | 15,7 (perpendiculairement à la longueur du spécimen) |
| Force d'estampage⁽³⁾ (N) | 282 | 824 |
| Déformation de rupture lors de l'estampage⁽³⁾ (mm) | 17 | 32 |

| | | |
|---|---|---|
| ⁽¹⁾ L'essai de traction est effectué sur des spécimens d'essai de 50 mm de large et ayant une longueur de serrage de 300 mm. Le premier maximum atteint est interprété comme une fracture. La résistance est exprimée comme la force par mètre de large. L'élasticité est calculée sur la tangente représentant la première partie droite sur la courbe et est exprimée comme l'augmentation de force par mètre de large et élongation. ⁽²⁾ La résistance à la rupture est testée conformément à Elmendorf. L'équipement est prévu pour un test de papier, ce qui signifie que le poids du pendule est trop faible. Les résultats sont par conséquent seulement donnés à titre indicatif. ⁽³⁾ L'estampage est réalisé avec un poinçon plat d'un diamètre de 19 mm. Le matériau est maintenu fixement entre deux bagues d'acier revêtues de caoutchouc de diamètre intérieur d'ouverture de 125 mm. La vitesse de déformation est de 5 mm/min. | | |

Les mesures illustrées dans le tableau sont effectuées sur des matériaux de même épaisseur, mais dans ce cas le produit Isogenopak® a un poids par unité de surface plus de deux fois plus élevé. Bien que les valeurs de mesure pour Isogenopak® soient pratiquement deux fois plus élevées, le matériau testé selon l'invention présente des propriétés mécaniques telles qu'il satisfait aux critères souhaités pour l'invention, à savoir qu'il supporte les contraintes qui s'appliquent et auxquelles on s'attend lors du montage, de l'entretien et lors de l'utilisation normale du système d'isolation. Il convient de noter que le matériau de revêtement selon l'invention est principalement prévu pour être utilisé sous forme appliquée fixement contre une isolation, contrairement à Isogenopak®, ou même à une plaque "Stucco", qui est prévue pour être appliquée sous forme d'un recouvrement lâche. L'application fixe fait que le système d'isolation sans son ensemble présente de meilleurs propriétés mécaniques que le système d'isolation correspondant ayant un recouvrement d'Isogenopak® ou de plaque "Stucco".

Le matériau de revêtement testé satisfait à l'exigence imposée selon "couche superficielle de classe 1" conformément à SS 02 48 23/NORDTEST-FIRE 004.

Un matériau de revêtement 1 comprenant un certain nombre de couches a été décrit ci-dessus. De tels matériaux de revêtement 1 sont produits de manière appropriée en ce que les couches contenues dans le matériau sont appliquées les unes contre les autres sous forme de nappe continue de matériau en appliquant simultanément de la pression et de la chaleur, après quoi le matériau de revêtement fini est enroulé sur un rouleau en vue d'un transport ultérieur jusqu'à l'emplacement souhaité, par exemple en vue de la production d'un système d'isolation. Afin de créer une "mémoire" ou un effet de courbure dans le matériau de revêtement, afin qu'il s'efforce par exemple d'obtenir un enroulement conjoint ayant un certain rayon de courbure, il peut être avantageux que les nappes de matériau intégrées dans le stratifié présentent des tensions d'étirement différentes. Ceci peut être avantageux lors de la production de coquilles pour tuyaux ou de profilés avec un rayon de courbure. Dans une coquille pour tuyau avec un volet d'étanchéité, ce type de "mémoire" peut être très avantageux dans la mesure où le matériau de revêtement, et avec lui le volet, a tendance à s'appliquer contre la surface d'enveloppe de la coquille pour tuyau au lieu de s'écarter de sa surface d'enveloppe. La "mémoire" réduit par conséquent les contraintes de traction éventuelles dans un joint pourvu d'un adhésif, ce qui rend le joint plus fiable et durable.

En référence à la figure 3, il est illustré schématiquement un système d'isolation 7 sous forme de coquille pour tuyau 8 avec un matériau de revêtement 1 conformément à la première forme de réalisation de l'invention mentionnée ci-dessus. La coquille pour tuyau 8 comprend un matériau thermiquement isolant 9 avec une fente traversante longitudinale 10 qui facilite le montage de la coquille pour tuyau 8. Par-dessus le matériau thermiquement isolant 9, un morceau de matériau de revêtement 1 a été appliqué le long de la circonférence par l'application de pression et de chaleur. Le matériau de revêtement 1 a été lié thermiquement au matériau thermiquement isolant 9 lors de cette application. Le matériau de revêtement 1 peut, comme indiqué, présenter une largeur telle qu'il enveloppe le long de la circonférence, la coquille pour tuyau sur plus de 360°, c'est-à-dire que le matériau de revêtement 1 forme un volet 11. Le volet 11 présente une partie adhésive longitudinale 12 ayant un film protecteur pour sceller la fente 10 de la coquille pour tuyau 8. Lors du montage, la coquille pour tuyau 8 est prévue pour être forcée, à l'aide de la fente 10, sur le tuyau qui doit être isolé, après quoi la fente 10 est scellée en amenant le volet 11 et sa partie adhésive 12 à adhérer contre la surface d'enveloppe de la coquille pour tuyau.

Des expériences réalisées avec un tel système d'isolation 7 montrent que, du fait de l'épaisseur sur la couche en feuille métallique extérieure 3, qui, dans le test, était constituée de 40 µm d'aluminium pur, celui-ci satisfaisait à l'exigence stipulée dans la réglementation suédoise de protection ignifuge "couche superficielle de classe 1" selon SS 02 48 23/NORDTEST-FIRE 004. En outre le matériau de revêtement 1 présente, du fait de la combinaison de la couche en feuille métallique 3 et de la couche en plastique 4, des propriétés mécaniques satisfaisantes pour résister aux contraintes extérieures qui sont courantes lors du montage, de l'utilisation normale au cours de sa durée de vie et au cours de l'entretien. De ce fait, il n'y a pas besoin d'un recouvrement protecteur séparé en aluminium ou en plastique, et de ce fait le montage est très simple, rapide et fiable. La combinaison de la couche en feuille métallique extérieure 3 et de la couche en plastique 4 fait que le matériau de revêtement 1 présente une structure telle au niveau de ses bords coupés/polis qu'il n'existe aucun risque réel de blessures par coupures lors de la manipulation de l'élément d'isolation 7.

Contrairement à l'art antérieur, on obtient par conséquent, au moyen du matériau de revêtement 1 selon l'invention, un système d'isolation 7 disposé d'une seule pièce qui satisfait à tous les paramètres qui peuvent seulement être obtenus avec la technique conventionnelle en combinant le système d'isolation 7 avec un recouvrement séparé en plastique ou en métal. Le système d'isolation 7 comprenant le matériau de revêtement 1 selon l'invention peut être fabriqué de la même manière qu'un matériau de revêtement traditionnel qui comprend une mince feuille d'aluminium pur, avec ou sans armature. La fabrication à la fois du matériau de revêtement et du système d'isolation 7 peut de plus avoir lieu sur un équipement existant.

Une technique correspondante peut évidemment être utilisée pour le système d'isolation 7 avec une conception autre qu'une coquille pour tuyau, par exemple sous la forme d'un mat ou d'un panneau. Dans ce cas, le matériau de revêtement 1 peut évidemment être disposé avec une surface plus grande que le matériau thermiquement isolant 9, ce par quoi il se forme des volets périphériques avec ou sans partie adhésive pourvue d'un film protecteur.

Un système d'isolation 7 selon l'invention peut aussi être combiné avec un matériau hygroscopique non illustré pour repousser une condensation éventuelle qui peut se former ou pénétrer à l'intérieur du système d'isolation, lors de l'utilisation. Le matériau hygroscopique peut être disposé sous forme de couche dans ledit matériau de revêtement, ou sous forme de couche séparée. Par matériau hygroscopique, on entend ici un matériau qui est en mesure d'absorber et de transporter la vapeur et l'eau et de délivrer la vapeur en fonction de l'humidité de l'atmosphère environnante, de manière à essayer d'atteindre un équilibre. Le matériau hygroscopique peut se composer d'une série de matériaux différents comme par exemple de fibre de verre, de bois, de papier, d'argile active, de silicate d'aluminium ou de gel de silice. Le matériau hygroscopique peut aussi se composer d'un matériau thermoplastique tel que du polyester ou du nylon.

Le matériau hygroscopique peut être disposé de diverses manières dans un système d'isolation. Au cas où il est intégré avec le matériau de revêtement, il devrait au moins se trouver partiellement en liaison avec le matériau thermiquement isolant. Ceci peut être mis en oeuvre en le disposant, par exemple, entre une couche de liant thermoplastique discontinue et la couche en plastique.

Il convient d'apprécier que la présente invention n'est pas limitée aux formes de réalisation illustrées et décrites du matériau de revêtement selon l'invention. De nombreuses modifications et variantes sont ainsi possibles et l'invention est par conséquent définie exclusivement par les revendications annexées.

## Revendications

1. Matériau de revêtement (1) sous forme stratifiée destiné à des systèmes d'isolation (7) comprenant un matériau thermiquement isolant pour éléments d'installation tels que des tuyaux, des récipients et des conduits de ventilation, lequel système d'isolation (7) présente une surface que le matériau de revêtement (1) doit recouvrir, **caractérisé en ce qu'**il comprend
- une première couche en feuille métallique extérieure (3), par exemple une feuille d'aluminium, ayant une épaisseur comprise dans la plage de 20 à 100 µm et plus préférablement de 30 à 60 µm,
- une couche en plastique (4) disposée entre la première couche en feuille métallique (3) et la surface du système d'isolation (7),
- une couche de liant thermoplastique (5) pour relier ledit matériau de revêtement (1) audit système d'isolation (7), le point de fusion de ladite couche de liant thermoplastique (5) étant inférieur au point de fusion de ladite couche en plastique (4).

2. Matériau de revêtement selon la revendication précédente **caractérisé en ce que** la couche en plastique (4) a une épaisseur comprise dans la plage de 10 à 100 µm et plus préférablement de 20 à 40 µm.

3. Matériau de revêtement selon l'une des revendications précédentes, dans lequel la couche en plastique (4) est constituée de PET.

4. Matériau de revêtement selon l'une des revendications précédentes, dans lequel le liant thermoplastique (5) est disposé sous forme de couche continue.

5. Matériau de revêtement selon l'une des revendications 1 à 3, dans lequel le liant thermoplastique (5) est disposé sous forme de couche discontinue.

6. Matériau de revêtement selon l'une des revendications précédentes, dans lequel la couche de liant thermoplastique (5) est constituée de LDPE d'une épaisseur comprise dans la plage de 10 à 100 µm, et plus préférablement de 20 à 50 µm.

7. Matériau de revêtement selon l'une des revendications précédentes, comprenant une deuxième couche en feuille métallique interne (6), par exemple une feuille d'aluminium, qui présente une épaisseur comprise dans la plage de 5 à 30 µm, et plus préférablement de 7 à 20 µm, laquelle couche en feuille métallique est disposée entre ladite couche en plastique (4) et ladite couche de liant thermoplastique (5).

8. Matériau de revêtement selon l'une des revendications précédentes, lequel présente une structure superficielle munie de gaufrages.

9. Matériau de revêtement selon l'une des revendications précédentes, dans lequel ladite couche en plastique (4) contient un agent ignifuge.

10. Matériau de revêtement selon l'une des revendications précédentes, dans lequel ladite couche de liant thermoplastique (5) contient un agent ignifuge.

11. Matériau de revêtement selon l'une des revendications précédentes, comprenant un matériau hygroscopique disposé de manière adjacente à ladite couche de liant thermoplastique (5).

12. Matériau de revêtement selon l'une des revendications précédentes, dans lequel les couches intégrées (3, 4, 5, 6) présentent des tensions d'étirement différentes.

13. Système d'isolation comprenant un matériau thermiquement isolant (9), **caractérisé en ce que** la surface du matériau thermiquement isolant est recouverte par un matériau de revêtement de l'une des revendications précédentes.

14. Système d'isolation selon l'une des revendications de système précédentes, un volet (11) étant disposé sur ledit matériau de revêtement (1) prévu pour l'application sur un joint entre deux systèmes d'isolation (7) adjacents ou une fente (10) dans un système d'isolation.

15. Système d'isolation selon la revendication précédente, dans lequel ledit volet (11) présente, sur l'une de ses faces, une partie pourvue d'adhésif (12).

16. Système d'isolation selon l'une des revendications de système précédentes, le matériau de revêtement comprenant un matériau hygroscopique disposé de manière adjacente à ladite couche de liant thermoplastique (5), ledit matériau hygroscopique étant librement exposé à l'atmosphère environnante dans l'état monté du système d'isolation (7), grâce audit volet (11).

17. Système d'isolation selon l'une des revendications de système précédentes, **caractérisé en ce qu'**il est constitué d'une coquille pour tuyau, d'un mat ou d'un panneau.

18. Système d'isolation selon l'une des revendications de système précédentes, **caractérisé en ce qu'**il comprend un matériau hygroscopique se trouvant en liaison directe avec le matériau thermiquement isolant.

19. Utilisation du matériau de l'une des revendications de matériau précédentes pour revêtir un matériau thermiquement isolant (9).

20. Utilisation du système d'isolation de l'une des revendications de système précédentes pour isoler un tuyau.

## Patentansprüche

1. Beschichtungsmaterial (1) in Laminatform, das für Dämmsysteme (7), die ein thermisch dämmendes Material enthalten, für Installationselemente wie Rohre, Behälter und Lüftungsleitungen bestimmt ist, wobei das Dämmsystem (7) eine Oberfläche aufweist, die mit dem Beschichtungsmaterial (1) beschichtet werden soll, **dadurch gekennzeichnet, dass** es Folgendes enthält:
- eine erste äußere Schicht aus Metallfolie (3), zum Beispiel eine Aluminiumfolie, mit einer Dicke, die zwischen 20 und 100 µm und vorzugsweise zwischen 30 und 60 µm beträgt,
- eine Schicht aus Kunststoff (4), die zwischen der ersten Schicht aus Metallfolie (3) und der Oberfläche des Dämmsystems (7) angeordnet ist,
- eine Schicht aus thermoplastischem Bindemittel (5) für die Verbindung des Beschichtungsmaterial (1) mit dem Dämmsystem (7), wobei der Schmelzpunkt der Schicht aus thermoplastischem Bindemittel (5) niedriger ist als der Schmelzpunkt der Schicht aus Kunststoff (4).

2. Beschichtungsmaterial nach dem vorhergehenden Anspruch, **dadurch gekennzeichnet, dass** die Schicht aus Kunststoff (4) eine Dicke hat, die zwischen 10 und 100 µm und vorzugsweise zwischen 20 und 40 µm beträgt.

3. Beschichtungsmaterial nach einem der vorhergehenden Ansprüche, wobei die Schicht aus Kunststoff (4) aus PET besteht.

4. Beschichtungsmaterial nach einem der vorhergehenden Ansprüche, wobei das thermoplastische Bindemittel (5) in Form einer durchgängigen Schicht angeordnet ist.

5. Beschichtungsmaterial nach einem der Ansprüche 1 bis 3, wobei das thermoplastische Bindemittel (5) in Form einer nicht durchgängigen Schicht angeordnet ist.

6. Beschichtungsmaterial nach einem der vorhergehenden Ansprüche, wobei die Schicht aus thermoplastischem Bindemittel (5) aus LDPE mit einer Dicke besteht, die zwischen 10 und 100 µm und vorzugsweise zwischen 20 und 50 µm beträgt.

7. Beschichtungsmaterial nach einem der vorhergehenden Ansprüche, enthaltend eine zweite innen liegende Schicht aus Metallfolie (6), zum Beispiel eine Aluminiumfolie, die eine Dicke aufweist, die zwischen 5 und 30 µm und vorzugsweise zwischen 7 und 20 µm beträgt, wobei die Schicht aus Metallfolie zwischen der Schicht aus Kunststoff (4) und der Schicht aus thermoplastischem Bindemittel (5) angeordnet ist.

8. Beschichtungsmaterial nach einem der vorhergehenden Ansprüche, die eine Oberflächenstruktur aufweist, die mit Gaufragen versehen ist.

9. Beschichtungsmaterial nach einem der vorhergehenden Ansprüche, wobei die Schicht aus Kunststoff (4) ein Flammschutzmittel enthält.

10. Beschichtungsmaterial nach einem der vorhergehenden Ansprüche, wobei die Schicht aus thermoplastischem Bindemittel (5) ein Flammschutzmittel enthält.

11. Beschichtungsmaterial nach einem der vorhergehenden Ansprüche, enthaltend ein hygroskopisches Material, das zu der Schicht aus thermoplastischem Bindemittel (5) benachbart angeordnet ist.

12. Beschichtungsmaterial nach einem der vorhergehenden Ansprüche, wobei die integrierten Schichten (3, 4, 5, 6) unterschiedliche Streckspannungen aufweisen.

13. Dämmsystem, enthaltend ein thermisch dämmendes Material (9), **dadurch gekennzeichnet, dass** die Oberfläche des thermisch dämmenden Materials mit einem Beschichtungsmaterial nach einem der vorhergehenden Ansprüche beschichtet ist.

14. Dämmsystem nach einem der vorhergehenden Systemansprüche, wobei eine Klappe (11) auf dem Beschichtungsmaterial (1) angeordnet ist für die Aufbringung auf einem Dichtungselement zwischen zwei benachbarten Dämmsystemen (7) oder einem Schlitz (10) in einem Dämmsystem.

15. Dämmsystem nach dem vorhergehenden Anspruch, wobei die Klappe (11) auf einer ihrer Flächen einen Teil aufweist, der mit Klebstoff (12) versehen ist.

16. Dämmsystem nach einem der vorhergehenden Systemansprüche, wobei das Beschichtungsmaterial ein hygroskopisches Material enthält, das zu der Schicht aus thermoplastischem Bindemittel (5) benachbart angeordnet ist, wobei das hygroskopische Material im montierten Zustand des Dämmsystems (7) mit Hilfe der Klappe (11) der umgebenden Atmosphäre frei ausgesetzt ist.

17. Dämmsystem nach einem der vorhergehenden Systemansprüche, **dadurch gekennzeichnet, dass** es von einer Rohrschale, von einer Matte oder von einem Paneel gebildet ist.

18. Dämmsystem nach einem der vorhergehenden Systemansprüche, **dadurch gekennzeichnet, dass** es ein hygroskopisches Material enthält, das in direkter Verbindung mit dem thermisch dämmenden Material steht.

19. Verwendung des Materials nach einem der vorhergehenden Materialansprüche, um ein thermisch dämmendes Material (9) zu beschichten.

20. Verwendung des Dämmsystems nach einem der vorhergehenden Systemansprüche, um ein Rohr zu dämmen.

## Claims

1. A coating material (1) in laminate form, intended in an insulation system (7) for installation elements such as pipes, containers and ventilation ducts, which insulation system (7) has a surface that the coating material (1) must cover, **characterized in that** it comprises
- a first outer layer (3) made of metal foil, for example an aluminum foil, having a thickness within the 20 to 100 µm and more preferably 30 to 60 µm range,
- a plastic layer (4) placed between the metal foil first layer (3) and the surface of the insulation system (7),
- a thermoplastic tie layer (5) connecting said coating material (1) to said insulation system (7), the melting point of said thermoplastic tie layer (5) being below the melting point of said plastic layer (4).

2. The coating material as claimed in the preceding claim, **characterized in that** the plastic layer (4) has a thickness within the 10 to 100 µm and more preferably 20 to 40 µm range.

3. The coating material as claimed in either of the preceding claims, in which the plastic layer (4) consists of PET.

4. The coating material as claimed in either of the preceding claims, in which the thermoplastic tie layer (5) is in the form of a continuous layer.

5. The coating material as claimed in either of claims 1 to 4, in which the thermoplastic tie layer (5) is in the form of a discontinuous layer.

6. The coating material as claimed in either of preceding claims, in which the thermoplastic tie layer (5) consists of LDPE with a thickness within the 10 to 100 µm and more preferably 20 to 50 µm range.

7. The coating material as claimed in in either of preceding claims, which includes an internal, second layer (6) made of metal foil, for example an aluminum foil, which has a thickness within the 5 to 30 µm and more preferably 7 to 20 µm range, which metal foil layer is placed between said plastic layer (4) and said thermoplastic tie layer (5).

8. The coating material as claimed in one of the preceding claims, which has a surface structure provided with embossments.

9. The coating material as claimed in one of the preceding claims, in which said plastic layer (4) contains a fire retardant.

10. The coating material as claimed in one of the preceding claims, in which said thermoplastic tie layer (5) contains a fire retardant.

11. The coating material as claimed in one of the preceding claims, which includes a hygroscopic material, which hygroscopic material is placed so as to be adjacent said thermoplastic tie layer (5).

12. The coating material as claimed in any one of the preceding claims, in which the integrated layers (3, 4, 5, 6) have different stretch tensions.

13. An insulation system comprising a thermally insulating material (9), **characterized in that** the surface of the thermally insulating material (9) is covered with a coating material of one of preceding claims.

14. An insulation system according to preceding claim, a flap (11) being placed on said coating material (1) for application on a joint between two adjacent insulation systems (7), or a slit (10) in an insulation system.

15. The insulation system as claimed in preceding claims, in which said flap (11) has, on one of its faces, a portion (12) provided with adhesive.

16. The insulation system as claimed in one of the preceding system claims, the coating material comprising a hygroscopic material placed so as to be adjacent said thermoplastic tie layer (5), said hygroscopic material being freely exposed to the surrounding atmosphere in the fitted state of the insulation system (7), thanks to said flap (11).

17. The insulation system as claimed in one of the preceding system claims, **characterized in that** it consists of a pipe shell, a mat or a panel.

18. The insulation system as claimed in one of the preceding system claims, **characterized in that** it comprises an hygroscopic material contacting directly the thermally insulating material.

19. Use of the coating material of one of the claims of coating material for covering a thermally insulating material.

20. Use of the insulation system of one the claims of insulation system for insulating a pipe.
